# FASCICULE DE BREVET EUROPEEN

(11) **EP 1 805 434 B1**
(45) Date de publication et mention de la délivrance du brevet: **11.04.2012**
(21) Numéro de dépôt: 05815843.7
(22) Date de dépôt: 20.10.2005
(51) Int. Cl.: F16H 57/04

(54) **BOITE DE VITESSES POUR VEHICULE AUTOMOBILE COMPRENANT UN DISPOSITIF DE LUBRIFICATION FORCEE DES ROUES D'ENGRENAGE**
GETRIEBE FÜR EIN KRAFTFAHRZEUG MIT DRUCKUMLAUFSCHMIERSYSTEM FÜR DIE ZAHNRÄDER
TRANSMISSION FOR A MOTOR VEHICLE COMPRISING A FORCED LUBRICATION SYSTEM FOR THE GEAR WHEELS

(30) Priorité: 22.10.2004 FR 0411267
(43) Date de publication de la demande: 11.07.2007
(73) Titulaire: Renault s.a.s., 92100 Boulogne Billancourt (FR)
(72) Inventeur: GERMAIN, Arnaud, F-91120 PALAISEAU (FR); CHAUVIN, Michael, F-17260 MONTPELLIER DE MEDILLAN (FR); BUANNEC, Michel, F-78480 VERNEUIL SUR SEINE (FR)
(86) Numéro de dépôt international: PCT/FR2005/050873
(87) Numéro de publication internationale: WO 2006/043008

(56) Documents cités:
- EP-A- 0 362 043
- EP-A- 0 448 457
- DE-A1- 4 117 409
- FR-A- 2 831 632

## Description

### DOMAINE TECHNIQUE AUQUEL SE RAPPORTE L'INVENTION

La présente invention concerne de manière générale les boîtes de vitesses pour véhicules automobiles.

Elle concerne plus particulièrement une boîte de vitesses comprenant un arbre de sortie monté rotatif dans un carter, des roues d'engrenages montées de manière rotative sur ledit arbre de sortie pour les différentes vitesses et un dispositif de lubrification forcée desdites roues d'engrenages comprenant une canule d'alimentation en lubrifiant d'un alésage axial dudit arbre de sortie débouchant vers l'extérieur par des canaux radiaux.

Un tel dispositif de lubrification forcée permet de lubrifier, outre les roues d'engrenage, les cônes de synchronisation, les joints et les roulements de la boîte de vitesses, et, plus généralement, tous les éléments de ladite boîte de vitesses nécessitant un apport de lubrifiant.

L'invention trouve une application particulièrement avantageuse dans la réalisation d'une boîte de vitesses mécanique ou robotisée dans laquelle l'engagement d'un rapport est assuré par crabotage d'un pignon monté fou sur un arbre de sortie au moyen d'une fourchette de commande montée sur un axe coulissant dans des paliers des carters de ladite boîte de vitesses.

### ARRIERE-PLAN TECHNOLOGIQUE

Les boîtes de vitesses connues du type précité comportent généralement une lubrification dite « par barbotage » qui consiste à immerger totalement ou partiellement les trains d'engrenages dans un lubrifiant contenu dans le carter qui est étanche vis-à-vis de l'extérieur.

Ainsi, le fond du carter constitue un réservoir contenant un lubrifiant dans lequel trempe en permanence une partie d'au moins une roue.d'engrenage. La rotation de cette roue d'engrenage provoque l'entraînement d'une partie du lubrifiant et son éjection par centrifugation en direction des parois internes du carter.

Une partie du lubrifiant éjecté ruisselle alors sur lesdites parois internes du carter et est orientée par des nervures de fonderie portées par lesdites parois vers au moins un palier de montage de l'arbre de sortie.

L'alimentation en lubrifiant de la canule d'alimentation du dispositif de lubrification forcée de telles boîtes de vitesses est assurée par la récupération du lubrifiant ruisselant sur les parois internes du carter.

Les canules d'alimentation des dispositifs de lubrification forcée connus, comme celle du dispositif générique décrit dans le document DE 3422048, sont des canules de courte longueur qui permettent seulement d'amener le lubrifiant à l'entrée de l'alésage axial de l'arbre de sortie.

La rotation de l'arbre de sortie provoque la centrifugation dans l'alésage axial du lubrifiant apporté à l'entrée dudit alésage et la majeure partie du lubrifiant sort à l'extérieur de l'arbre de sortie par le premier canal radial qu'il rencontre après sa sortie de la canule d'alimentation.

Ainsi, seuls les éléments de l'empilage de la boîte de vitesses situés à proximité de ce premier canal radial de l'arbre de sortie sont correctement lubrifiés par le lubrifiant déversé par ladite canule d'alimentation dans l'arbre de sortie, les autres éléments de l'empilage situés plus loin de la canule d'alimentation étant très peu lubrifiés.

La faible lubrification de ces éléments éloignés de la canule d'alimentation est très pénalisante pour le fonctionnement de la boîte de vitesses, puisqu'elle conduit généralement soit à un blocage de la boîte de vitesses, soit à une usure prématurée de certains éléments de l'empilage.

### OBJET DE L'INVENTION

Afin de remédier aux inconvénients précités de l'état de la technique, la présente invention propose une nouvelle boîte de vitesses dans laquelle une bonne lubrification de tous les éléments de l'empilage porté par l'arbre de sortie est assurée en toutes circonstances.

Plus particulièrement, l'invention propose une boîte de vitesses telle que définie en introduction, dans laquelle ladite canule d'alimentation est percée de trous répartis sur sa longueur et elle s'étend dans ledit alésage axial de manière à traverser de part en part ledit arbre de sortie.

Ainsi, avantageusement, dans la boîte de vitesses selon l'invention, tous les canaux radiaux de l'arbre de sortie sont alimentés en lubrifiant par ladite canule d'alimentation indépendamment de la vitesse de rotation de l'arbre de sortie et en conséquence tous les éléments de l'empilage porté par l'arbre de sortie sont lubrifiés correctement.

D'autres caractéristiques non limitatives et avantageuses de l'invention sont les suivantes :
- il est prévu des moyens de montage fixe de la canule d'alimentation dans ledit carter adaptés à centrer ladite canule d'alimentation sur l'axe dudit arbre de sortie,
- chaque trou de la canule d'alimentation est positionné à proximité d'un canal radial de l'arbre de sortie,
- lesdits moyens de montage comprennent, à l'extérieur de l'alésage axial de l'arbre de sortie, deux pièces de montage engagées sur les deux extrémités de la canule d'alimentation dont une première pièce de montage présentant, d'une part, sur son pourtour des pattes de montage destinées à être coincées entre le carter et la bague extérieure du roulement de l'arbre de sortie, et, d'autre part, une ouverture centrale traversante prolongée du côté de l'arbre de sortie par un manchon d'assemblage destiné à recevoir une extrémité ouverte de ladite canule d'alimentation,
- ladite extrémité ouverte de la canule d'alimentation est engagée à force dans le manchon d'assemblage de la première pièce de montage,
- il est prévu dans le carter un renfoncement formant derrière ladite première pièce de montage un logement de réserve dans lequel s'accumule une quantité de lubrifiant qui ruisselle sur des parois internes du carter, cette quantité de lubrifiant étant destinée à s'écouler dans ladite canule d'alimentation,
- lesdits moyens de montage comprennent à l'extérieur de l'arbre de sortie une deuxième pièce de montage dont le pourtour prend appui contre le carter, cette deuxième pièce de montage comprenant en son centre, du côté de l'arbre de sortie, un manchon d'assemblage destiné à recevoir une extrémité de ladite canule d'alimentation,
- ladite deuxième pièce de montage est solidarisée de manière indémontable à ladite canule d'alimentation,
- ladite deuxième pièce de montage comporte, d'une part, une ouverture centrale traversante qui communique avec une ouverture prévue à l'extrémité de ladite canule d'alimentation, et, d'autre part, des échancrures sur son pourtour formant des ouvertures de passage de lubrifiant provenant de ladite canule d'alimentation entre l'arrière et l'avant de ladite deuxième pièce de montage,
- il est prévu des moyens de centrage de la canule d'alimentation sur l'axe de l'arbre de sortie distincts desdits moyens de montage, et
- lesdits moyens de centrage comprennent un bourrelet qui entoure l'extrémité de la canule d'alimentation située du côté du carter de mécanisme.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en coupe partielle longitudinale d'un mode de réalisation d'une boîte de vitesses selon l'invention ;
- la figure 2 est une vue schématique en perspective assemblée du dispositif de lubrification forcée de la boîte de vitesses de la figure 1 ; et
- la figure 3 est une vue schématique en perspective éclatée du dispositif de lubrification de la figure 2.

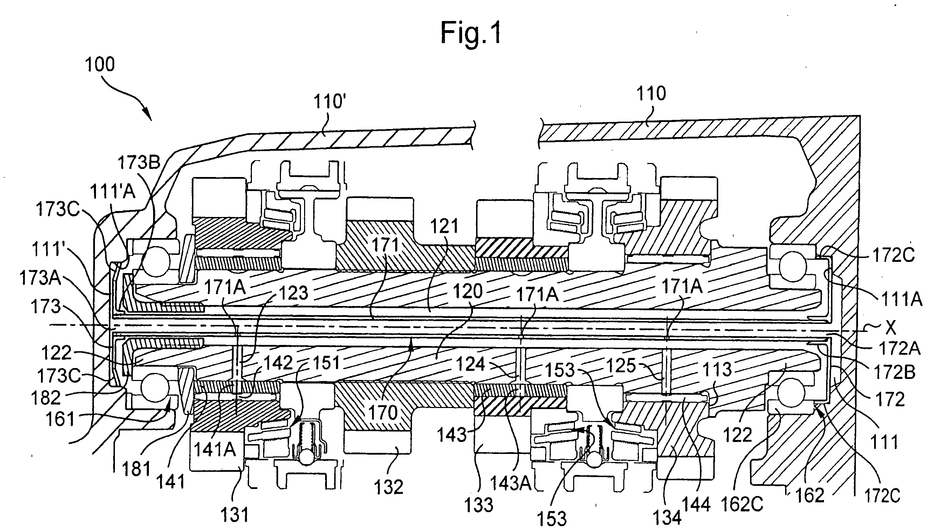

Sur la figure 1 on a représenté partiellement une boîte de vitesses 100 pour véhicule automobile qui comprend un carter formé par l'assemblage d'un carter d'embrayage 110 et d'un carter de mécanique 110'.

Le carter de la boîte de vitesses 100 contient un arbre primaire (non représenté) entraîné par le moteur et destiné à coopérer par le biais de roues d'engrenage avec les roues d'engrenage d'un arbre de sortie 120 monté rotatif dans le carter.

Pour cela, les deux extrémités 122 de l'arbre de sortie 120 sont montées dans des roulements 161, 162 solidaires respectivement du carter de mécanisme 110' et du carter d'embrayage 110 de la boîte de vitesses 100.

L'arbre de sortie 120 de la boîte de vitesses 100 supporte un empilage comprenant d'une part, des roues d'engrenage 131, 133, 134 montées de manière rotative sur ledit arbre de sortie 120 et, d'autre part, des mécanismes de synchronisation pour solidariser en rotation chacune des roues d'engrenage 131, 133, 134 avec l'arbre de sortie.

Chaque mécanisme de synchronisation comporte un moyeu solidaire de l'arbre de sortie 120 et un baladeur déplaçable en translation entre deux positions extrêmes (la position extrême éloignée est représentée sur la figure 1). Chaque baladeur permet le frottement du cône de synchronisation 151, 153 sur le cône de sa roue d'engrenage 131, 133, 134 pour l'entraîner à la vitesse souhaitée via l'arbre primaire non représenté.

En outre l'empilage supporté par l'arbre de sortie 120 comprend une roue d'engrenage 132 montée fixe sur l'arbre de sortie 120 par l'intermédiaire de cannelures. Cette roue d'engrenage 132 peut servir pour le passage de la marche arrière.

Selon l'exemple représenté la roue d'engrenage 131 située du côté du carter du mécanisme 110' est montée sur l'arbre de sortie 120 par l'intermédiaire d'une bague d'acier 141 et d'une cage à aiguilles 142. Les deux roues d'engrenage 133, 134 situées du côté du carter d'embrayage 110 sont montées sur l'arbre de sortie 120 respectivement par l'intermédiaire d'une bague d'acier 143 et d'une cage à aiguilles 144. -

L'empilage de boîte de vitesses est maintenu axialement sur l'arbre de sortie 120 en étant coincé entre un épaulement 113 de l'arbre de sortie 120, prévu du côté du carter d'embrayage 110 contre lequel s'appuie la roue d'engrenage 134, et une rondelle 181 enfilée sur l'arbre de sortie 120 du côté du carter de mécanisme 110'. Le blocage de l'ensemble est réalisé classiquement par l'intermédiaire d'une vis 182 vissée dans l'arbre de sortie 120, dont la tête prend appui contre la bague intérieure du roulement 161 situé dans le carter de mécanisme 110'.

La lubrification des différents éléments de l'empilage supporté par l'arbre de sortie 120 est réalisée de manière classique par « barbotage », le carter de la boîte de vitesses 100 constitué par l'assemblage du carter d'embrayage 110 et du carter de mécanisme 110' constituant un réservoir contenant un lubrifiant (de l'huile) dans lequel trempe en permanence une partie au moins d'une roue d'engrenage de la boîte de vitesses.

La rotation de cette roue d'engrenage provoque l'entraînement d'une partie du lubrifiant et son éjection en direction des parois internes du carter. Le lubrifiant éjecté ruisselle alors sur les parois internes du carter et est orienté par des nervures de fonderie (non représentées) des parois internes de ce carter vers le roulement 162 prévu pour le montage de l'arbre de sortie du côté du carter d'embrayage 110.

La boîte de vitesses 100 représentée sur la figure 1, comporte, outre la lubrification dite par « barbotage », un dispositif de lubrification forcée 170 des roues d'engrenage 131, 133, 134 portées par l'arbre de sortie 120. Ce dispositif de lubrification forcée 170 permet également de lubrifier les cônes de synchronisation, les joints et les roulements de la boîte de vitesses et plus généralement tous les éléments de la boîte de vitesses nécessitant un apport de lubrifiant.

Il comporte une canule d'alimentation 171 qui permet d'amener le lubrifiant dans un alésage axial 121 de l'arbre de sortie 120, cet alésage axial 121 débouchant vers l'extérieur notamment par des canaux radiaux 123, 124, 125 qui débouchent à proximité des roues d'engrenage 131, 133, 134 correspondantes.

À cet effet, on remarquera que les bagues d'acier 141, 143, par l'intermédiaire desquelles les roues d'engrenage 131, 133 sont montées à rotation libre sur l'arbre de sortie 120 sont également percées d'un canal 141A, 143A qui communique avec le canal radial 123, 124 correspondant de l'arbre de sortie 120 pour établir la communication entre l'intérieur de l'alésage axial 121 de l'arbre de sortie et les roues d'engrenage 131, 133. Le canal radial 125 de l'arbre de sortie 120 situé à proximité de la roue d'engrenage 134 débouche dans la cage à aiguilles 144 qui supporte ladite roue d'engrenage.

Selon une caractéristique particulièrement avantageuse de la boîte de vitesses 100 selon l'invention, la canule d'alimentation 171 est percée de trous 171A répartis sur sa longueur et elle s'étend dans ledit alésage axial 121 de manière à traverser de part en part l'arbre de sortie 120.

Ici, la canule d'alimentation 171 comporte trois trous 171A qui sont disposés à proximité des canaux radiaux 123, 124, 125 correspondants de l'arbre de sortie 120.

Comme le montrent les figures 1, 2 et 3, il est prévu des moyens de montage fixe de la canule d'alimentation 171 dans le carter de la boîte de vitesses adaptée à centrer la canule d'alimentation 171 sur l'axe X de l'alésage axial 121 de l'arbre de sortie 120.

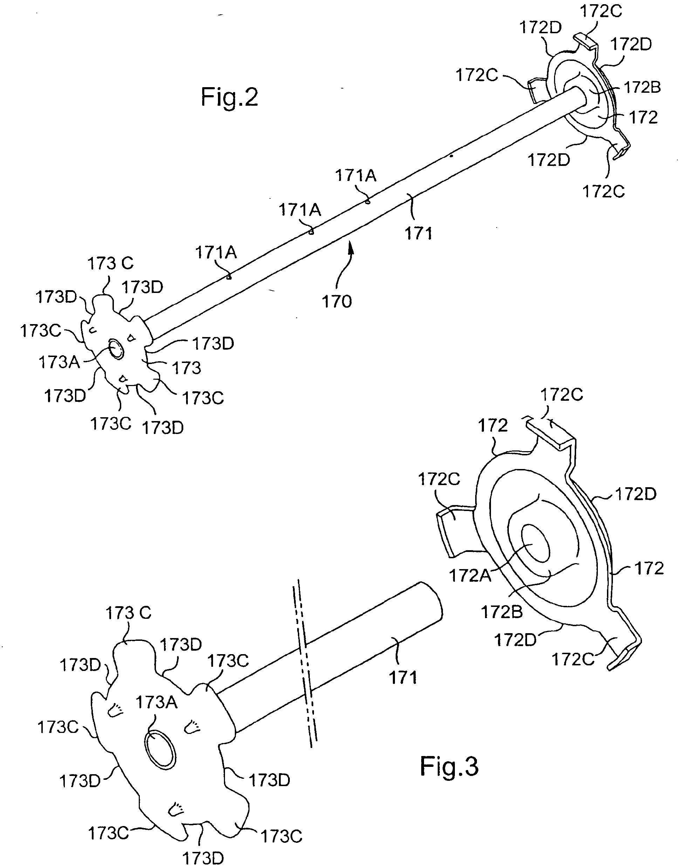

Comme le montrent plus particulièrement les figures 2 et 3, ces moyens de montage comprennent à l'extérieur de l'alésage axial 121 de l'arbre de sortie 120, deux pièces de montage 172, 173 engagées sur les deux extrémités de la canule d'alimentation 171.

La première pièce de montage 172, appelée ici déflecteur, présente une forme globalement circulaire, elle comporte sur son pourtour des pattes de montage 172C destinées à être coincées entre un épaulement 111A du carter d'embrayage 110 et la bague extérieure fixe 162A du roulement 162 de l'arbre de sortie 120. Le déflecteur 172 comporte en outre une ouverture centrale 172A traversante prolongée du côté de l'arbre de sortie 120 par un manchon d'assemblage 172B destiné à recevoir une extrémité ouverte de la canule d'alimentation 171. Des échancrures 172D sont définies entre les pattes de montage 172C du déflecteur 172.

Ici, l'extrémité ouverte de la canule d'alimentation 171 est engagée à force dans le manchon d'assemblage 172B du déflecteur 172.

Comme on peut le voir plus particulièrement sur la figure 1, il est prévu dans le carter d'embrayage 110 de la boîte de vitesses 100 un renfoncement 111 formant derrière le déflecteur 172 un logement de réserve dans lequel s'accumule une quantité de lubrifiant qui ruisselle sur les parois internes du carter d'embrayage et qui s'écoule au travers d'une gorge (non représentée) du roulement 162. La quantité de lubrifiant accumulé dans le logement de réserve 111 est destinée à s'écouler dans ladite canule d'alimentation 171 en direction des trous 171A de sortie vers les canaux radiaux 123, 124, 125 de l'arbre de sortie 120.

À l'extrémité opposée de la canule d'alimentation 171, lesdits moyens de montage comprennent à l'extérieur de l'arbre de sortie 120, une deuxième pièce de montage 173, appelée ici centreur, dont le pourtour prend appui contre le carter de mécanisme 110'.

Plus particulièrement, comme le montre la figure 1, il est prévu dans la paroi interne du carter de mécanisme 110', un renfoncement 111' à paroi latérale cylindrique de révolution 111'A dans lequel se loge le centreur 173. Le centreur 173 comporte des ailettes 173C qui s'appuient contre la paroi cylindrique de révolution 111'A du renfoncement 111'. Le centreur 173 comporte en son centre un manchon d'assemblage 173B destiné à recevoir l'extrémité correspondante de la canule d'alimentation 171. Le centreur 173 est solidarisé de manière indémontable à ladite canule d'alimentation 171 par exemple par soudage.

Avantageusement, selon le mode de réalisation représenté sur les figures, le centreur 173 comporte, d'une part, une ouverture centrale traversante 173A qui communique avec une ouverture prévue à l'extrémité de la canule d'alimentation 171, et, d'autre part, des échancrures 173D définies sur son pourtour entre les ailettes 173C et formant des ouvertures de passage de lubrifiant provenant de ladite canule d'alimentation entre l'arrière et l'avant dudit centreur 173. Cette alimentation en lubrifiant permet de lubrifier plus particulièrement le roulement 161 de montage de l'arbre de sortie 120 situé dans le carter de mécanisme 110'.

Il est intéressant de préciser que cette canule d'alimentation 171 ne doit pas toucher les parois de l'alésage axial 121 de l'arbre de sortie 120 pour éviter tout risque d'usure et d'échauffement. Le centrage de la canule d'alimentation 171 est alors primordial compte tenu des faibles jeux de fonctionnement et il est effectué aux deux extrémités de la canule d'alimentation 171 par l'intermédiaire du déflecteur 172 et du centreur 173.

Le centrage de la canule d'alimentation 171 du dispositif de lubrification 170 s'effectue alors de la manière suivante.

Tout d'abord, au montage, on positionne le déflecteur 172 dans le carter d'embrayage 110 contre l'épaulement 111A puis on emmanche la bague extérieure 162A du roulement 162 de l'arbre de sortie 120 dans le carter d'embrayage 110 de façon à coincer les pattes de montage 172C du déflecteur 172 entre l'épaulement 111A du carter d'embrayage 110 et cette bague extérieure 162A du roulement 162.

Puis, on positionne l'ensemble des arbres dans le carter d'embrayage et on enfile la canule d'alimentation 171 solidaire du centreur 173 dans !'a!ésage axial 121 de l'arbre de sortie 120 de manière à emboîter en force son extrémité dans le manchon d'assemblage 172B du déflecteur 172. Le centreur 173 prolongeant la canule d'alimentation 171 dépasse de l'arbre de sortie 120 et l'on vient rapporter sur le centreur 173 le carter de mécanisme 110' de façon que celui-ci se coince dans le renfoncement 111' prévu à cet effet.

Comme cela est représenté sur les figures 2 et 3 les ailettes 173C du centreur 173 étant inclinées, elles permettent à celui-ci de rentrer correctement dans le renfoncement 111' lors de l'opération de chapeautage du carter de mécanisme 110'.

Nous allons maintenant décrire le fonctionnement du dispositif de lubrification forcé 170 de la boîte de vitesses 100 selon l'invention.

Le lubrifiant projeté par la ou les roue(s) d'engrenage correspondante de la boîte de vitesses sur les parois internes du carter d'embrayage 110 ruisselle sur celle-ci et une partie de ce lubrifiant est canalisée par des nervures de fonderie non représentées du carter d'embrayage jusqu'à une gorge non représentée du roulement 162 de montage de l'arbre de sortie 120 du côté du carter d'embrayage 110. Le lubrifiant s'écoule dans cette gorge du roulement 162 et s'accumule dans le logement de réserve 111 formé derrière le déflecteur 172 du dispositif de lubrification forcé 170. Lorsque le niveau de lubrifiant dans le logement de réserve 111 s'établit au-dessus de l'axe X de l'arbre de sortie 120, le lubrifiant s'écoule dans la canule d'alimentation 171 qui joue le rôle d'une canalisation. Le lubrifiant sort via les trous 171A de la canule d'alimentation 171 dans l'alésage axial 121 de l'arbre de sortie 120. Avec la rotation de l'arbre de sortie 120, le lubrifiant situé dans l'alésage axial 121 est centrifugé et sort par le canal radial 123, 124, 125 le plus proche qui joue le rôle d'une pompe centrifuge. C'est pour cela qu'il est avantageux que la canule d'alimentation 171 soit percée de trous 171A situés à proximité des canaux radiaux 123, 124, 125 de l'arbre de sortie 120.

Le diamètre des trous 171A de la canule d'alimentation 171 est calibré comme des gicleurs pour optimiser la distribution de lubrifiant entre les différents canaux radiaux 123, 124, 125 de l'arbre de sortie 120.

En outre, comme cela a déjà été explicité précédemment, une partie du lubrifiant s'écoulant dans la canule d'alimentation 171 arrive jusqu'au centreur 173, s'écoule derrière celui-ci et ressort au travers des échancrures 173D du centreur 173 du côté du roulement 161 de l'arbre de sortie 120 situé dans le carter de mécanisme 110'. De cette manière, une quantité de lubrifiant alimentée par la canule d'alimentation 171 sert à lubrifier le roulement 161.

La présente invention n'est nullement limitée aux modes de réalisation décrits et représentés, mais l'homme du métier saura y apporter toutes variantes dans la portée des revendications.

Par exemple, on pourra prévoir selon des variantes de l'invention, outre les moyens de montage, des moyens de centrage distincts de ceux-ci et comprenant un bourrelet qui entoure l'extrémité de la canule d'alimentation située du côté du carter de mécanisme, ce bourrelet servant de guide pour centrer au mieux la canule d'alimentation dans l'alésage axial de l'arbre de sortie lors de l'opération de chapeautage du carter de mécanisme sur le centreur du dispositif de lubrification forcée.

## Revendications

1. Boîte de vitesses (100) pour véhicule automobile comprenant un arbre de sortie (120) monté rotatif dans un carter, des roues d'engrenages (131, 133, 134) montées de manière rotative sur ledit arbre de sortie pour les différentes vitesses et un dispositif de lubrification forcée (170) desdites roues d'engrenages comprenant une canule d'alimentation (171) en lubrifiant d'un alésage axial (121) dudit arbre de sortie débouchant vers l'extérieur par des canaux radiaux (123, 124, 125), **caractérisée en ce que** ladite canule d'alimentation (171) est percée de trous (171A) répartis sur sa longueur et elle s'étend dans ledit alésage axial (121) de manière à traverser de part en part ledit arbre de sortie (120).

2. Boîte de vitesses (100) selon la revendication 1, **caractérisée en ce qu'**il est prévu des moyens de montage fixe de la canule d'alimentation (171) dans ledit carter adaptés à centrer ladite canule d'alimentation (171) sur l'axe (X) dudit arbre de sortie (120).

3. Boîte de vitesses (100) selon l'une des revendications 1 ou 2, **caractérisée en ce que** chaque trou (171 A) de la canule d'alimentation (171) est positionné à proximité d'un canal radial (123, 124, 125) de l'arbre de sortie (120).

4. Boîte de vitesses (100) selon l'une des revendications 2 ou 3, **caractérisée en ce que** lesdits moyens de montage comprennent, à l'extérieur de l'alésage axial (121) de l'arbre de sortie (120), deux pièces de montage engagées sur les deux extrémités de la canule d'alimentation (171) dont une première pièce de montage (172) présentant, d'une part, sur son pourtour des pattes de montage (172C) destinées à être coincées entre le carter (110) et la bague extérieure du roulement (162) de l'arbre de sortie (120), et, d'autre part, une ouverture centrale (172A) traversante prolongée du côté de l'arbre de sortie par un manchon d'assemblage (172B) destiné à recevoir une extrémité ouverte de ladite canule d'alimentation (171).

5. Boîte de vitesses (100) selon la revendication 4, **caractérisée en ce que** ladite extrémité ouverte de la canule d'alimentation (171) est engagée à force dans le manchon d'assemblage (172B) de la première pièce de montage (172).

6. Boîte de vitesses (100) selon l'une des revendications 4 ou 5, **caractérisée en ce qu'**il est prévu dans le carter (110) un renfoncement (111) formant derrière ladite première pièce de montage (170) un logement de réserve dans lequel s'accumule une quantité de lubrifiant qui ruisselle sur des parois internes du carter, cette quantité de lubrifiant étant destinée à s'écouler dans ladite canule d'alimentation (171).

7. Boîte de vitesses (100) selon l'une des revendications 2 à 6, **caractérisée en ce que** lesdits moyens de montage comprennent à l'extérieur de l'arbre de sortie une deuxième pièce de montage (173) dont le pourtour prend appui contre le carter (110'), cette deuxième pièce de montage (173) comprenant en son centre, du côté de l'arbre de sortie, un manchon d'assemblage (173B) destiné à recevoir une extrémité de ladite canule d'alimentation (171).

8. Boîte de vitesses (100) selon la revendication 8, **caractérisée en ce que** ladite deuxième pièce de montage (173) est solidarisée de manière indémontable à ladite canule d'alimentation (171).

9. Boîte de vitesses (100) selon l'une des revendications 8 ou 9, **caractérisée en ce que** ladite deuxième pièce de montage (173) comporte, d'une part, une ouverture centrale (173A) traversante qui communique avec une ouverture prévue à l'extrémité de ladite canule d'alimentation (171), et, d'autre part, des échancrures (173D) sur son pourtour formant des ouvertures de passage de lubrifiant provenant de ladite canule d'alimentation entre l'arrière et l'avant de ladite deuxième pièce de montage.

10. Boîte de vitesses selon l'une des revendications 2 ou 9, **caractérisée en ce qu'**il est prévu des moyens de centrage de la canule d'alimentation sur l'axe de l'arbre de sortie distincts desdits moyens de montage.

11. Boîte de vitesses selon la revendication 10, **caractérisée en ce que** lesdits moyens de centrage comprennent un bourrelet qui entoure l'extrémité de la canule d'alimentation située du côté du carter de mécanisme.

## Claims

1. Transmission (100) for a motor vehicle comprising an output shaft (120) mounted such that it can rotate inside a casing, gear wheels (131, 133, 134) mounted rotationally on said output shaft for the various speeds and a forced lubrication system (170) for said gear wheels comprising a lubricant supply tube (171) inside an axial bore (121) of said output shaft discharging to the outside via radial channels (123, 124, 125), **characterized in that** said supply tube (171) is drilled with holes (171A) distributed along its length and it extends inside said axial bore (121) so as to pass through said output shaft (120) from one end to the other.

2. Transmission (100) according to Claim 1, **characterized in that** there are provided means for fixed mounting of the supply tube (171) in said casing which can center said supply tube (171) on the axis (X) of said output shaft (120).

3. Transmission (100) according to one of Claims 1 or 2, **characterized in that** each hole (171A) in the supply tube (171) is positioned near a radial channel (123, 124, 125) of the output shaft (120).

4. Transmission (100) according to one of Claims 2 or 3, **characterized in that** said mounting means comprise, outside the axial bore (121) of the output shaft (120), two mounting parts fitted on the two ends of the supply tube (171) of which a first mounting part (172) having, on the one hand, on its periphery mounting lugs (172C) intended to be wedged between the casing (110) and the outer race of the bearing (162) of the output shaft (120), and, on the other hand, a central through-hole (172A) extended at the output shaft end by a connecting sleeve (172B) intended to receive one open end of said supply tube (171).

5. Transmission (100) according to Claim 4, **characterized in that** said open end of the supply tube (171) is force-fitted into the connecting sleeve (172B) of the first mounting part (172).

6. Transmission (100) according to one of Claims 4 or 5, **characterized in that** there is provided in the casing (110) a recess (111) forming behind said first mounting part (172) a reserve cavity in which accumulates a quantity of lubricant which runs down the internal walls of the casing, this quantity of lubricant being intended to flow through said supply tube (171).

7. Transmission (100) according to one of Claims 2 to 6, **characterized in that** said mounting means comprise outside the output shaft a second mounting part (173) of which the periphery bears on the casing (110'), this second mounting part (173) comprising at its center, at the output shaft end, a connecting sleeve (173B) intended to receive one end of said supply tube (171).

8. Transmission (100) according to Claim 7, **characterized in that** said second mounting part (173) is irremovably connected to said supply tube (171).

9. Transmission (100) according to one of Claims 7 or 8, **characterized in that** said second mounting part (173) includes, on the one hand, a central through-hole (173A) which communicates with an opening provided in the end of said supply tube (171), and, on the other hand, cutouts (173D) on its periphery forming openings for the passage of lubricant coming from said supply tube between the rear and the front of said second mounting part.

10. Transmission according to one of Claims 2 or 9, **characterized in that** there are provided means for centering the supply tube on the axis of the output shaft distinct from said mounting means.

11. Transmission according to Claim 10, **characterized in that** said centering means comprise a flange which surrounds the end of the supply tube located at the gear case end.

## Patentansprüche

1. Getriebe (100) für ein Kraftfahrzeug, das eine drehbar in einem Gehäuse montierte Abtriebswelle (120), Getrieberäder (131, 133, 134), die für die verschiedenen Gänge drehbar auf die Abtriebswelle montiert sind, und eine Druckschmiervorrichtung (170) der Getrieberäder enthält, die eine Kanüle (171) zur Schmiermittelversorgung einer axialen Bohrung (121) der Abtriebswelle enthält, die durch radiale Kanäle (123, 124, 125) nach außen mündet, **dadurch gekennzeichnet, dass** die Versorgungskanüle (171) auf ihre Länge verteilte Löcher (171A) aufweist und sich in der axialen Bohrung (121) so erstreckt, dass sie die Abtriebswelle (120) von einer Seite zur anderen durchquert.

2. Getriebe (100) nach Anspruch 1, **dadurch gekennzeichnet, dass** Einrichtungen zur festen Montage der Versorgungskanüle (171) im Gehäuse vorgesehen sind, die geeignet sind, um die Versorgungskanüle (171) auf die Achse (X) der Abtriebswelle (120) zu zentrieren.

3. Getriebe (100) nach einem der Ansprüche 1 oder 2, **dadurch gekennzeichnet, dass** jedes Loch (171A) der Versorgungskanüle (171) in der Nähe eines radialen Kanals (123, 124, 125) der Abtriebswelle (120) positioniert ist.

4. Getriebe (100) nach einem der Ansprüche 2 oder 3, **dadurch gekennzeichnet, dass** die Montageeinrichtungen außerhalb der axialen Bohrung (121) der Abtriebswelle (120) zwei Montagebauteile enthalten, die auf die zwei Enden der Versorgungskanüle (171) aufgeschoben sind, von denen ein erstes Montagebauteil (172) einerseits auf seinem Umfang Montagelaschen (172C), die dazu bestimmt sind, zwischen dem Gehäuse (110) und dem Außenring des Lagers (162) der Abtriebswelle (120) eingeklemmt zu werden, und andererseits eine zentrale Durchgangsöffnung (172A) enthält, die auf der Seite der Abtriebswelle durch eine Zusammenbaumuffe (172B) verlängert wird, die dazu bestimmt ist, ein offenes Ende der Versorgungskanüle (171) aufzunehmen.

5. Getriebe (100) nach Anspruch 4, **dadurch gekennzeichnet, dass** das offene Ende der Versorgungskanüle (171) in die Zusammenbaumuffe (172B) des ersten Montagebauteils (172) presseingepasst wird.

6. Getriebe (100) nach einem der Ansprüche 4 oder 5, **dadurch gekennzeichnet, dass** im Gehäuse (110) eine Vertiefung (111) vorgesehen ist, die hinter dem ersten Montagebauteil (172) eine Reserveaufnahme bildet, in der sich eine Schmiermittelmenge sammelt, die auf Innenwänden des Gehäuses rieselt, wobei diese Schmiermittelmenge dazu bestimmt ist, in die Versorgungskanüle (171) zu fließen.

7. Getriebe (100) nach einem der Ansprüche 2 bis 6, **dadurch gekennzeichnet, dass** die Montageeinrichtungen außerhalb der Abtriebswelle ein zweites Montagebauteil (173) enthalten, dessen Umfang gegen das Gehäuse (110') anliegt, wobei dieses zweite Montagebauteil (173) in seiner Mitte auf der Seite der Abtriebswelle eine Zusammenbaumuffe (173B) enthält, die dazu bestimmt ist, ein Ende der Versorgungskanüle (171) aufzunehmen.

8. Getriebe (100) nach Anspruch 7, **dadurch gekennzeichnet, dass** das zweite Montagebauteil (173) unzerlegbar fest mit der Versorgungskanüle (171) verbunden ist.

9. Getriebe (100) nach einem der Ansprüche 7 oder 8, **dadurch gekennzeichnet, dass** das zweite Montagebauteil (173) einerseits eine zentrale Durchgangsöffnung (173A), die mit einer am Ende der Versorgungskanüle (171) vorgesehenen Öffnung in Verbindung steht, und andererseits Aussparungen (173D) an seinem Umfang aufweist, die Durchgangsöffnungen für das von der Versorgungskanüle kommende Schmiermittel zwischen der Rückseite und der Vorderseite des zweiten Montagebauteils bilden.

10. Getriebe (100) nach einem der Ansprüche 2 oder 9, **dadurch gekennzeichnet, dass** Zentriereinrichtungen der Versorgungskanüle auf der Achse der Abtriebswelle vorgesehen sind, die sich von den Montageeinrichtungen unterscheiden.

11. Getriebe (100) nach Anspruch 10, **dadurch gekennzeichnet, dass** die Zentriereinrichtungen einen Wulst enthalten, der das Ende der Versorgungskanüle umgibt, das sich auf der Seite des Mechanismusgehäuses befindet.
